Europäisches Patentamt

European Patent Office

Office européen des brevets

(19)

(11) **EP 1 540 594 B1**

(12) **EUROPEAN PATENT SPECIFICATION**

(45) Date of publication and mention
of the grant of the patent:
**25.10.2006 Bulletin 2006/43**

(51) Int Cl.:
***G06T 7/20*** (2006.01)

(21) Application number: **02765756.8**

(86) International application number:
**PCT/SG2002/000179**

(22) Date of filing: **07.08.2002**

(87) International publication number:
**WO 2004/019152 (04.03.2004 Gazette 2004/10)**

(54) **METHOD AND SYSTEM FOR DETERRENCE OF UNAUTHORISED REUSE OF DISPLAY CONTENT**

VERFAHREN UND SYSTEM ZUR ABSCHRECKUNG UNERLAUBTEN WIEDERGEBRAUCHS DES BILDSCHIRMINHALTS

PROCEDE ET SYSTEME POUR LA DISSUASION DE REUTILISATION NON AUTORISEE DE CONTENU D'AFFICHAGE

(84) Designated Contracting States:
**AT BE BG CH CY CZ DE DK EE ES FI FR GB GR IE IT LI LU MC NL PT SE SK TR**

(43) Date of publication of application:
**15.06.2005 Bulletin 2005/24**

(73) Proprietor: **Agency for Science, Technology and Research
Singapore 138668 (SG)**

(72) Inventors:
• **Wu, Yong-Dong
Singapore 130036 (SG)**

• **Ma, Di
Singapore 640172 (SG)**
• **Wei, Xiao, Feng
Singapore 120371 (SG)**

(74) Representative: **Wilson Gunn
5th Floor
Blackfriars House
The Parsonage
Manchester M3 2JA (GB)**

(56) References cited:
**US-A- 5 881 187        US-A- 5 905 505
US-B1- 6 208 735        US-B1- 6 209 103**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

### Field of the invention

The invention relates generally to the field of content display. In particular, it relates to the deterrence of unauthorised reuse of display content for display on computer screens.

### Background

With the rapid growth of the Internet, more and more images are accessible to Internet users. However, not all providers of images on the Internet are willing to permit users to keep the images provided and displayed on screens, much less allow the users to distribute the images at will. Present network protocols such as the HyperText Transfer Protocol (HTTP) do not address the issue of protecting images or other display content such as text downloaded from websites or other remote resources. As a result, any user who has access to a website is able to save and reuse display content downloaded from that website. This is because a number of World Wide Web (WWW) browsers provide a save function allowing users to save a web page and a composer feature which the users can use to edit the saved display content. A user can also type a Print Screen key typically found on the keyboard of a computer to perform screen dumps or capture snapshots of a series of images stored in the video buffer of the computer by duplicating the video buffer. Using programs that enable the user to create, view, and edit images, the user can then easily obtain the images by retrieving these snapshots.

It is hence difficult to prevent unauthorised reuse of display content downloaded from or provided via a remote resource. A diligent pirate can reuse both text and images by re-typing the text and performing screen dumps of the images shown on the screen. It is therefore desirable to deter unauthorised reuse of display content by either forcing a pirate to spend significant amounts of money and time to obtain display content, or degrading the quality of reused screen content. To this end, a number of patents and conventional technologies have been proposed which are described hereinafter.

In US Patent No. 5,905,505, a method and a system for copy protection of on-screen display of text are disclosed, in which embodiments described therein prevent screen dumps of text displayed on computer screens by first having the text transformed into a textual image. In a first embodiment, two random background images are generated and added to the textual image to produce two composite images. The two composite images are then alternately displayed on a screen to simulate the on-screen rendering of the textual image. In a second embodiment, the textual image is modified to produce two random bitmapped images. The two random bitmapped images are then alternately displayed for simulating the on-screen rendering of the textual image. Although in both cases the textual image is irretrievable by performing screen dumps, because only one of the pair of composite or random bitmapped images can be captured as a snapshot each instant, a user acquires a visual perception resembling the textual image by averaging each pair of composite or random bitmapped images as these are alternately displayed on the screen. However, the embodiments work adequately only for high contrast images such as textual images but not for display content with low contrast such as pictures.

In US Patent No. 6,209,103, a method and an apparatus for preventing reuse of text, images and software transmitted via networks are disclosed, which involve the transformation of textual information into images. In one embodiment, text is transformed into a textual image. In a further embodiment, an image is divided into multiple sub-images with each sub-image being a component of the image or an interference pattern is incorporated into different locations of the image to form multiple interference images with each interference image having a pattern at a unique location. An applet then displays these multiple images in succession over intervals. With these multiple images a user can only acquire a visual perception which resembles the original image but cannot obtain such an image from capturing snapshot of the video buffer once. Unfortunately, a pirate can still recover the image by capturing the video buffer several times to obtain all of the multiple images by trial. Generally, the number of attempts the pirate need to make to capture all of the multiple images is small because the number of sub-images is restricted by the screen's display refresh rate, which is usually less than 100Hz.

In US Patent No. 5,881,287, a method and an apparatus for copy protection of images in a computer system are disclosed which prevent unlicensed transfers of image data from a video adapter to other storage means. This is done by the interception of data transfer requests made to an operating system and identifying whether an image requested is one to be protected. If the image requested is one that is marked for protection, any data transfer incorporating the protected image is obscured, blacked out or replaced with another specified pattern or message. However, such a protection system can be easily bypassed. A pirate can load a hook program which intercepts the request before the protection system intercepts the request. For instance, when a user types the Print-Screen key on a computer keyboard, a hook program can intercept the Print-Screen request and copies the video buffer into another storage medium before the protection system can black out the snapshot.

In US Patent No. 6,208,735, a secure spread spectrum watermarking method for multimedia data is disclosed, which uses digital watermark technology to embed a watermark representing copyright into protected content so as to indicate ownership of the protected content. To remove the watermark, a pirate has to degrade the quality of the protected content. However, this method cannot prevent unauthorised reuse of the protected content.

In Microsoft's windows operating systems, an application program interface (API) such as the *sethook*() function is typically provided for intercepting a computer keyboard event. When a user types the Print-Screen key on a computer keyboard of a computer, the keyboard event can be intercepted by a hook application based on the *sethook*() function, which would prevent the default process of copying the content of the computer's video buffer onto a clipboard thus preventing reuse of information stored in the video buffer. The disadvantage of doing this is that the API *sethook*() function is a standalone application which has to be executed with a local user priority. This protection system is therefore not applicable to mobile codes such as Java applets.

There is therefore a need for a display content reuse deterrence system for addressing the foregoing problems.

**Summary**

An image is shown on a computer screen in the spatial domain. The human visual perception system, however, is sensitive to the frequency domain. To involve visual perception by the human visual perception system in the deterrence of reuse of display content, a system is disclosed in which an image is transformed into the frequency domain with corresponding frequency components. For every frequency component, a random number sequence is generated and a variant of the random number sequence is generated based on the value of the frequency component. The arithmetic mean value of any predefined length of segment of the random number sequence preferably tends to 0. A number is selected from every random number sequence and a noise image formed using the value of this number. The image in the frequency domain is combined with the noise image to generate a synthesised image known as a noise-deteriorated image, which is then transformed back to the spatial domain. From every random number sequence, multiple numbers are selected to generate multiple synthesised images for forming an image sequence. The image sequence is then displayed on the computer screen.

In such a system, an input such as an original image $X$, is processed into an output which consists of a sequence of noise-deteriorated images $\tilde{X}_k$ for rendering on the computer screen.

During preparation, the system transforms $X$ into $m$ components $f_1, f_2, \cdots, f_m$ in the frequency domain $F$. The system then generates a noise number sequence $r_i=\{r_{i1}, r_{i2}, \cdots\}$ for each component $f_i$. $i=1,2, \cdots, m$ before generating the noise-deteriorated images. Alternatively, each number in the noise number sequences can be generated while generating the corresponding noise-deteriorated image.

To generate the noise-deteriorated images, the system performs the following operations:

$$\text{for } k=1,2, \cdots$$

$$\text{for } i=1,2, \cdots, m$$

$$\tilde{f}_{ik} = f_i + r_{ik}$$

$$\text{end}$$

where the $k^{\text{th}}$ noise-deteriorated image $\tilde{F}_k$ in frequency domain

has $m$ components $\tilde{f}_{ik}$ . $i=1,2, \cdots, m;$

inverse-transform $\tilde{F}_k$ into $\tilde{X}_k$ ; and

render $\tilde{X}_k$ to the computer screen

$$\text{end.}$$

In accordance with a first aspect of the invention, a method for generating a plurality of noise-deteriorated images from an image displayable on a computer display for deterring unauthorised reuse of the image as defined in appended claim 1 is disclosed.

In accordance with a second aspect of the invention, a system for generating a plurality of noise-deteriorated images from an image displayable on a computer display for deterring unauthorised reuse of the image as defined in appended claim 9 is disclosed.

**Brief Description of Drawings**

Embodiments of the invention are described hereinafter in detail with reference to the drawings, in which:

Fig. 1 is block diagram of a computer system for displaying an image according to an embodiment of the invention;

Fig. 2 is a flowchart of an image transformation process according to the embodiment of Fig. 1;

Fig. 3 is a flowchart of a process for the generation of interference images according to the embodiment of Fig. 1; and

Fig. 4 is a block diagram of the image transformation and interference image generation processes of Figs. 2 and 3 for processing a two-by-two (2×2) pixels image for display.

**Detailed Description**

Embodiments of the invention are disclosed hereinafter for addressing the need for a display content reuse deterrence system.

In the field of vision sciences, the Talbot-Plateau Law states that the brightness of intermittent light is equal to the brightness of steady light with the same time-averaged luminance. For the Talbot-Plateau Law to apply, the intermittent light must illuminate at a rate beyond the Critical Flicker Frequency (CFF), which is the frequency at which flicker induced by intermittent illumination disappears. The Talbot-Plateau Law holds because when the human eye is presented with images changing at a rate above 24 frames per second, the human eye averages the images to visually perceive an averaged representation of the images rather than perceive the images separately.

The embodiments described hereinafter aim to prevent reuse of display content while providing good visual perception quality. Measurements of vision perception quality vary because of different criteria for vision perceptual. The embodiments primarily focus on the criterion of screen flicker.

Assume $X$ is the original image, and $X_k$ is an image at a $k^{\text{th}}$ frame shown on the screen in a sequence of $T$ images which can be copied from a video buffer of a computer on which X is displayed by performing a screen dump. Generally, any display content reuse deterrence system should satisfy the following requirements:

(1) Reduce to a minimum the arithmetic mean value of the difference $X_k$ - X, $i.\ e.$ $\dfrac{1}{T}\displaystyle\sum_{k=k_0}^{k_0+T} X_k - X$ tends to zero;

(2) At any frame $k$, the difference $X_k$-$X$ should be at a maximum

(3) If the screen display refresh rate is fast enough, the difference $X_k$ - $X$ should be global, $i.e.,$ distributed throughout the images.

The first requirement aims to reduce screen flicker to a minimum so as to display an image of high quality to authorised users. The other requirements aim to introduce interference into the video buffer so that any screen dump cannot result in a high quality image. The first requirement appears to contradict the others and a trade-off is therefore necessary for a display content reuse deterrence system to perform adequately.

To meet all three requirements by the embodiments, a series of interference or noise images is added to the original image to generate a sequence of degraded or noise-deteriorated images which are rendered in succession and repeatedly in place of the original image. Although the noise-deteriorated images are displayed, an authorised user can visually perceive the original image with high quality.

All the pixels in an image are affected when the image is modified in the frequency domain. Applying interference to an image in the frequency domain can therefore satisfy the third requirement.

There are two types of frequency components in an image, namely high and low frequency components. The high frequency components represent sharp or abrupt changes in the image while the low frequency components represent smooth or slow changes such as those found in a uniform region in the image. To meet the second requirement, high amplitude noise can be added to the high frequency components of the image to increase interference or noise in the image.

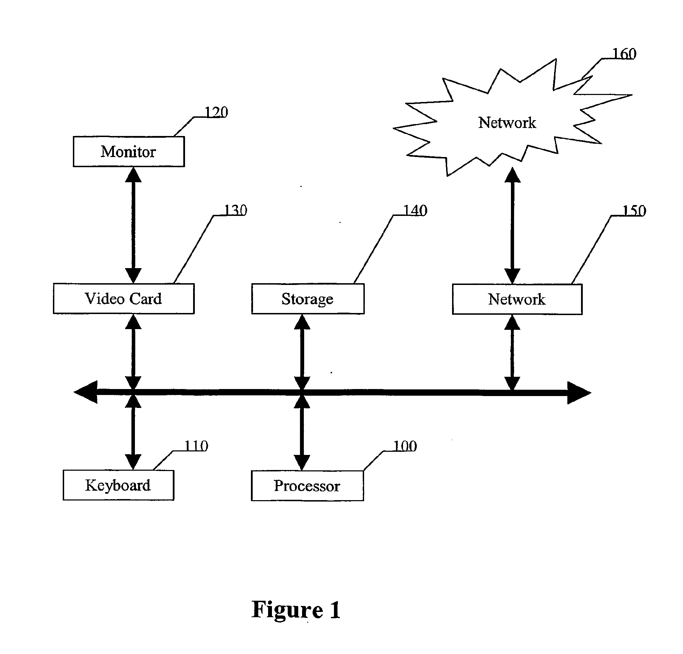

The embodiments are described in detail hereinafter with reference to Figs. 1 to 4. In Fig. 1, a computer system in which embodiments may be implemented is shown. The computer system comprises of a Central Process Unit (CPU) 100, a keyboard 110 with a key for activating screen dump, a video card 130 having a video buffer and a corresponding computer screen monitor 120, a storage unit 140 to store the program and data. Optionally, a network interface 150 is used to access to a network 160 to which the computer system is connected.

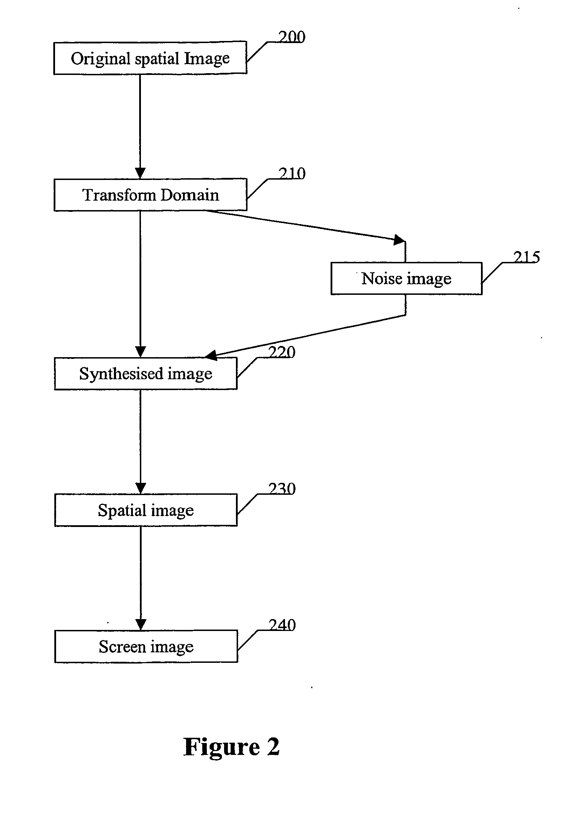

Fig. 2 is a flowchart of an image transformation process according to an embodiment of the invention, whereby in a step 200, an original image is introduced into a reuse deterrence system consisting of the computer system shown in Fig. 1 and an appropriate reuse deterrence software application. In this process, the original image is to be transformed into a series of synthesised or noise-deteriorated images which when displayed in succession give an authorised viewer a visual perception of the original image. The original image is first transformed into a series of frequency components in the frequency domain by a transformation process, such as Fast Fourier Transformation (FFT) or Discrete Cosine Transformation (DCT), in a step 210. All frequency components are denoted as $f_i$. For purposes of illustration, it is assumed that there are $m$ frequency components where $i = 1, 2, \cdots, m$.

Corresponding to each frequency component $f_i$, a random number sequence $r_i = \{r_{ij}$, where $j = 1, 2, \cdots \}$ is generated. In order to generate a $k^{th}$ synthesised image as display content for the $k^{th}$ display frame on the monitor 120 in a sequence of synthesised images, a corresponding $k^{th}$ interference or noise image is generated by using $r_{ik}$ ($i = 1, 2, \cdots, m$) in a step 215. Alternatively, a random number resource may be used in this step 215 to generate the $k^{th}$ interference image. Thus the $k^{th}$ synthesised image can then be generated by $f_i + r_{ik}$, where $i = 1, 2, \cdots, m$, in a step 220.

In a step 230, the $k^{th}$ synthesised image is transformed back to the spatial domain by reverse transformation. In a step 240, the spatial domain image of the $k^{th}$ synthesised image is provided as output to the monitor 160 for display as the $k^{th}$ display frame in the sequence of display frames.

In order to obtain a stable and flicker free image and prevent unauthorised reuse of the original image, the foregoing steps are preferably iterated indefinitely. Additionally, the random number sequence for each frequency component is preferably generated with the arithmetic mean value of each segment of the random number sequence of predefined length $T$ tending to zero. This is because the predefined length $T$ of each segment of the random number sequence for each frequency component is related to the noise amplitude, the frequency and perception tolerance of flicker. However, the smaller $T$ is, the better the quality of the visual perception of the original image.

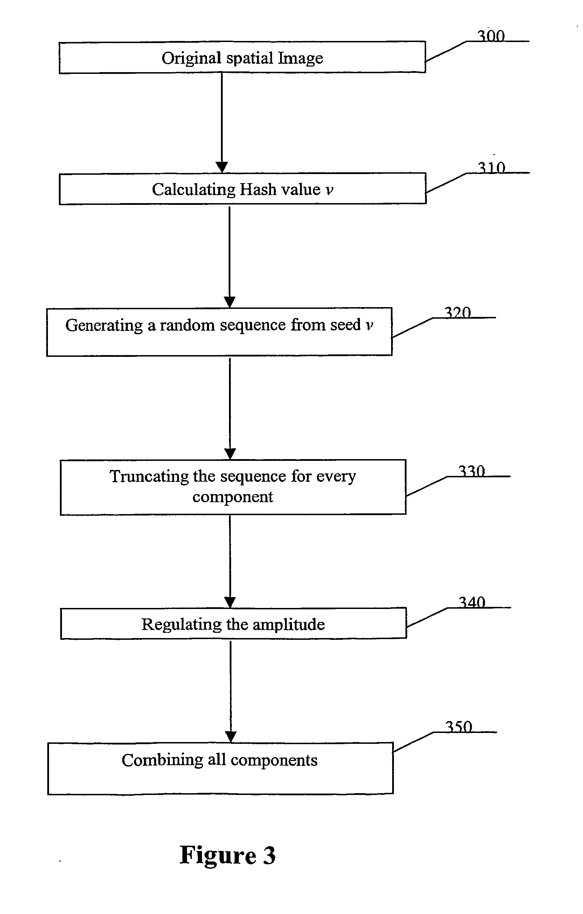

There are a number of ways to generate the interference images. Fig. 3 is a flowchart of an exemplifying process for the generation of the interference images. After receiving the original image in a step 300, a hash value $v$ representing the original image is calculated in a step 310. The hash value is a pseudo-random resource and can be obtained using SHA or MD5 hashing.

In a step 320, a uniform-distribution random number sequence within interval (-1.0, 1.0) is generated from the seed of the hash value $v$ by using a random function such as $rand(\ )$. In a step 330, for each $i^{th}$ frequency component a new hash value $h(v|i)$ is calculated, this new hash value marking the start position of a new random number sequence for the $i^{th}$ frequency component, where $h(\ )$ is a hash function.

In a step 340, based on the amplitude of the $i^{th}$ frequency component and properties of the human visual perception system, the amplitude of the new random number sequence for the $i^{th}$ frequency component is adjusted to a suitable level. In a step 350, all noise components for the frequency components relating to the $k^{th}$ display frame are combined, forming the $k^{th}$ noise image in the frequency domain.

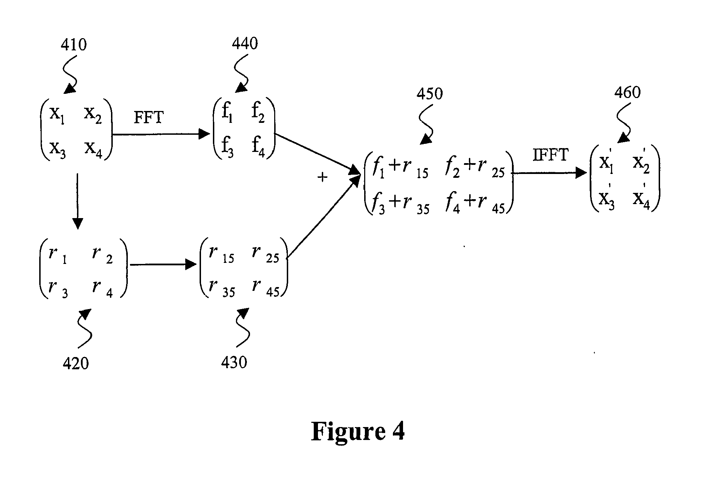

The foregoing processes are more clearly described using an example shown in Fig. 4, which is a block diagram of the foregoing processes for processing a two-by-two ($2\times2$) pixels image 410 for display on the monitor 160.

Given the $2 \times 2$ pixels original image 410, a noise number sequence is generated as follows:

$$\{R\} = \{R_1, R_2, R_3, R_4, R_5, R_6, \cdots\}, \text{ where } \sum_{i=k}^{k+T} R_i = 0.$$

The noise number sequence is then truncated into sub-sequences 420 and adjusted to appropriate amplitudes using a parameter $\{\alpha_i\}$. Each of the sub-sequences 420 also tends to zero if it is of sufficient length. These sub-sequences 420 are denoted as $\{r_1\}$, $\{r_2\}$, $\{r_3\}$ and $\{r_4\}$,

$$\{r_1\} = \alpha_1\{R_1, R_2, R_3, R_4, R_5, \cdots\} = \{r_{11}, r_{12}, r_{13}, r_{14}, r_{15}, r_{16}, \cdots\}$$

$$\{r_2\} = \alpha_2\{R_2, R_3, R_4, R_5, R_6, \cdots\} = \{r_{21}, r_{22}, r_{23}, r_{24}, r_{25}, r_{26}, \cdots\}$$

$$\{r_3\} = \alpha_3\{R_3, R_4, R_5, R_6, R_7, \cdots\} = \{r_{31}, r_{32}, r_{33}, r_{34}, r_{35}, r_{36}, \cdots\}$$

$$\{r_4\} = \alpha_4\{R_4, R_5, R_6, R_7, R_8, \cdots\} = \{r_{41}, r_{42}, r_{43}, r_{44}, r_{45}, r_{46}, \cdots\}$$

For purposes of illustration, it is assumed that the 5th (*i.e.*, $k=5$) frame is to be rendered. A noise image 430 is created with elements from the sub-sequences 420 corresponding to the $k^{th}$ display frame. The noise image 430 is added to the original image in the frequency domain 440 to form, the $k^{th}$ synthesised 450 image which is then transformed into the spatial domain. The $k^{th}$ synthesised image in the spatial domain 460 can then be rendered on the monitor 160 during the $k^{th}$ display frame.

In the foregoing manner, a display content reuse deterrence system is disclosed. Although only a number of embodiments are described, it will be apparent to one skilled in the art in view of this disclosure that numerous changes and/or modifications can be made to such a system without departing from the scope of the invention.

In this system, an input such as an original image $X$, is processed into an output which consists of a sequence of noise-deteriorated images $\widetilde{X}_k$ for rendering on the computer screen.

During preparation, the system transforms $X$ into $m$ components $f_1, f_2, \cdots, f_m$ in the frequency domain $F$. The system then generates a noise number sequence $r_i = \{r_{i1}, r_{i2}, \cdots\}$ for each component $f_i$- $i=1,2,\cdots, m$ before generating the noise-deteriorated images. Alternatively, each number in the noise number sequences can be generated while generating the corresponding noise-deteriorated image.

To generate the noise-deteriorated images, the system then performs the following operations:

$$\text{for } k=1,2, \cdots$$

$$\text{for } i=1,2, \cdots, m$$

$$\widetilde{f}_{ik} = f_i + r_{ik}$$

$$\text{end}$$

where the $k^{th}$ noise-deteriorated image $\widetilde{F}_k$ in frequency domain

has $m$ components $\widetilde{f}_{ik}$ . $i=1,2, \cdots, m$;

inverse-transform $\widetilde{F}_k$ into $\widetilde{X}_k$ ; and

render $\widetilde{X}_k$ to the computer screen

$$\text{end.}$$

**Claims**

1. A method for generating a plurality of noise-deteriorated images from an image displayable on a computer display for deterring unauthorised reuse of the image, the method comprising the steps of

transforming an image (200) displayable on a computer display (120) into a plurality of frequency components (210);

generating a noise sequence (320) for each frequency component in the plurality of frequency components, each noise sequence having a plurality of noise numbers;

selecting, in relation to a first noise-deteriorated image (215), a first noise number from each of the noise sequence;

deteriorating each frequency component in the plurality of frequency components using the first noise number from each noise sequence corresponding to each frequency component in the plurality of frequency components to form a noise-deteriorated frequency component in a first plurality of noise-deteriorated frequency components (220);

transforming the first plurality of noise-deteriorated frequency components into the first noise-deteriorated image (230);

selecting, in relation to a second noise-deteriorated image (215), a second noise number from each of the noise sequence;

deteriorating each frequency component in the plurality of frequency components using the second noise number from each noise sequence corresponding to each frequency component in the plurality of frequency components to form a noise-deteriorated frequency component in a second plurality of noise-deteriorated frequency components (220);

transforming the second plurality of noise-deteriorated frequency components into the second noise-deteriorated image (230); and

displaying consecutively the first and second noise-deteriorated images (240),

wherein visual perception of the displayed first and second noise-deteriorated images substantially results in visual perception of the image, and

wherein an attempt on image capture of the image substantially results in image capture of one of the displayed first and second noise-deteriorated images for thereby preventing unauthorized reuse of the image, the image capture of the image being unauthorized reuse of the image.

2. The method as in claim 1, wherein the step of displaying consecutively the first and second noise-deteriorated images comprises the step of repeating the consecutive display of the first and second noise-deteriorated images.

3. The method as in claim 2, wherein the step of displaying consecutively the first and second noise-deteriorated images further comprises the step of displaying consecutively the first and second noise-deteriorated images in accordance with the display refresh rate of the computer display.

4. The method as in claim 1, wherein the step of generating the noise sequence for each frequency component in the plurality of frequency components comprises the step of generating the noise sequence with a plurality of segments for each frequency component in the plurality of frequency components wherein the arithmetic mean value of each of the plurality of segments tends to zero.

5. The method as in claim 1, wherein the step of transforming the image comprises the step of performing Fast-Fourier Transformation on the image.

6. The method as in claim 5, wherein the steps of transforming the first and second pluralities of noise-deteriorated frequency components comprise the steps of performing Inverse Fast-Fourier Transformation on the first and second pluralities of noise-deteriorated frequency components.

7. The method as in claim 1, further comprising the step of generating a first noise sequence having a first plurality of noise numbers prior to the step of generating the noise sequence for each frequency component in the plurality of frequency component,

8. The method as in claim 7, wherein the step of generating the noise sequence for each frequency component in the plurality of frequency components comprises the step of truncating and modifying the amplitude of the first noise sequence having the first plurality of noise numbers to generate the noise sequence for each frequency component in the plurality of frequency components.

9. A system for generating a plurality of noise-deteriorated images from an image displayable on a computer display for deterring unauthorised reuse of the image, comprising:

means for transforming an image (200) displayable on a computer display (120) into a plurality of frequency components (210);

means for generating a noise sequence (320) for each frequency component in the plurality of frequency components, each noise sequence having a plurality of noise numbers;

means for selecting, in relation to a first noise-deteriorated image (215), a first noise number from each of the noise sequence;

means for deteriorating each frequency component in the plurality of frequency components using the first noise number from each noise sequence corresponding to each frequency component in the plurality of frequency components to form a noise-deteriorated frequency component in a first plurality of noise-deteriorated frequency components (220);

means for transforming the first plurality of noise-deteriorated frequency components into the first noise-deteriorated image (230);

means for selecting, in relation to a second noise-deteriorated image (215), a second noise number from each of the noise sequence;

means for deteriorating each frequency component in the plurality of frequency components using the second noise number from each noise sequence corresponding to each frequency component in the plurality of frequency components to form a noise-deteriorated frequency component in a second plurality of noise-deteriorated frequency components (220);

means for transforming the second plurality of noise-deteriorated frequency components into the second noise-deteriorated image (230); and

means for displaying consecutively the first and second noise-deteriorated images (240),

wherein visual perception of the displayed first and second noise-deteriorated images substantially results in visual perception of the image, and

wherein an attempt on image capture of the image substantially results in image capture of one of the displayed first and second noise-deteriorated images for thereby preventing unauthorized reuse of the image, the image capture of the image being unauthorized reuse of the image.

10. The system as in claim 9, wherein the means for displaying consecutively the first and second noise-deteriorated images comprises means for repeating the consecutive display of the first and second noise-deteriorated images.

11. The system as in claim 10, wherein the means for displaying consecutively the first and second noise-deteriorated images further comprises means for displaying consecutively the first and second noise-deteriorated images in accordance with the display refresh rate of the computer display.

12. The system as in claim 9, wherein the means for generating the noise sequence for each frequency component in the plurality of frequency components comprises means for generating the noise sequence with a plurality of segments for each frequency component in the plurality of frequency components wherein the arithmetic mean value of each of the plurality of segments tends to zero.

13. The system as in claim 9, wherein the means for transforming the image comprises means for performing Fast-Fourier Transformation on the image.

14. The system as in claim 13, wherein the means for transforming the first and second pluralities of noise-deteriorated frequency components comprise means for performing Inverse Fast-Fourier Transformation on the first and second pluralities of noise-deteriorated frequency components.

15. The system as in claim 9, further comprising means for generating a first noise sequence having a first plurality of noise numbers prior to the generation of the noise sequence for each frequency component in the plurality of frequency component.

16. The system as in claim 15, wherein the means for generating the noise sequence for each frequency component in the plurality of frequency components comprises means for truncating and modifying the amplitude of the first noise sequence having the first plurality of noise numbers to generate the noise sequence for each frequency component in the plurality of frequency components.

**Patentansprüche**

1. Verfahren zum Erzeugen einer Vielzahl von durch Rauschen verschlechterter Bilder aus einem Bild, welche auf einem Computerbildschirm darstellbar ist, zum Abschrecken von nicht autorisierter Wiederverwendung des Bildes, wobei das Verfahren die Schritte aufweist:

Umwandeln eines Bildes (200), welches auf einem Computerbildschirm (120) darstellbar ist, in eine Vielzahl von Frequenzkomponenten (210);

Erzeugen einer Rauschsequenz (320) für jede Frequenzkomponente der Vielzahl von Frequenzkomponenten, wobei jede Rauschsequenz eine Vielzahl von Rauschzahlen aufweist; Auswählen einer ersten Rauschzahl aus jeder der Rauschsequenzen in Bezug auf ein erstes durch Rauschen verschlechtertes Bild (215);

Verschlechtern jeder Frequenzkomponente der Vielzahl von Frequenzkomponenten unter Verwendung der ersten Rauschzahl aus jeder Rauschsequenz, welche mit jeder Frequenzkomponente der Vielzahl von Frequenzkomponenten korrespondiert, um eine durch Rauschen verschlechterte Frequenzkomponente in einer ersten Vielzahl von durch Rauschen verschlechterter Frequenzkomponenten (220) auszubilden;

Umwandeln der ersten Vielzahl von durch Rauschen verschlechterter Frequenzkomponenten in das erste durch Rauschen verschlechterte Bild (230);

Auswählen einer zweiten Rauschzahl aus jeder der Rauschsequenzen in Bezug auf ein zweites durch Rauschen verschlechtertes Bild (215);

Verschlechtern jeder Frequenzkomponente der Vielzahl von Frequenzkomponenten unter Verwendung der zweiten Rauschzahl aus jeder Rauschsequenz, welche mit jeder Frequenzkomponente der Vielzahl von Frequenzkomponenten korrespondiert, um eine durch Rauschen verschlechterte Frequenzkomponente in einer zweiten Vielzahl von durch Rauschen verschlechterter Frequenzkomponenten (220) auszubilden;

Umwandeln der zweiten Vielzahl von durch Rauschen verschlechterter Frequenzkomponenten in das zweite durch Rauschen verschlechterte Bild (230); und

aufeinander folgendes Darstellen des ersten und des zweiten durch Rauchen verschlechterten Bildes (240),

wobei die visuelle Wahrnehmung des dargestellten ersten und zweiten durch Rauschen verschlechterten Bildes im Wesentlichen die visuellen Wahrnehmung des Bildes ergibt, und

wobei ein Versuch der Bildaufnahme des Bildes im Wesentlichen die Bildaufnahme eines der dargestellten ersten und zweiten durch Rauschen verschlechterten Bilder ergibt, um damit nicht autorisierte Wiederverwendung des Bildes zu verhindern, wobei die Bildaufnahme des Bildes eine nicht autorisierte Wiederverwendung des Bildes ist.

2. Verfahren nach Anspruch 1,
wobei der Schritt des aufeinander folgenden Darstellens des ersten und des zweiten durch Rauschen verschlechterten Bildes den Schritt des Wiederholens der aufeinander folgenden Darstellung des ersten und des zweiten durch Rauschen verschlechterten Bildes aufweist.

3. Verfahren nach Anspruch 2,
wobei der Schritt des aufeinander folgenden Darstellens des ersten und des zweiten durch Rauschen verschlechterten Bildes des Weiteren den Schritt des aufeinander folgenden Darstellens des ersten und des zweiten durch Rauschen verschlechterten Bildes in Abhängigkeit der Bildschirmwiederholungsfrequenz des Computerbildschirmes aufweist.

4. Verfahren nach Anspruch 1,
wobei der Schritt des Erzeugens der Rauschsequenz für jede Frequenzkomponente der Vielzahl von Frequenzkomponenten den Schritt der Erzeugung einer Rauschsequenz mit einer Vielzahl von Segmenten für jede Frequenzkomponente der Vielzahl von Frequenzkomponenten aufweist, wobei der arithmetische Mittelwert jeder der Vielzahl von Segmenten gegen null tendiert.

5. Verfahren nach Anspruch 1,
wobei der Schritt des Umwandelns des Bildes den Schritt des Ausführens einer Fast-Fourier-Transformation an dem Bild aufweist.

6. Verfahren nach Anspruch 5,
wobei der Schritt des Umwandelns der ersten und der zweiten Vielzahlen von durch Rauschen verschlechterter Frequenzkomponenten den Schritt des Ausführens einer inversen Fast-Fourier-Transformation an den ersten und zweiten Vielzahlen von durch Rauschen verschlechterter Frequenzkomponenten aufweist.

**7.** Verfahren nach Anspruch 1,
des Weiteren aufweisend den Schritt des Erzeugens einer ersten Rauschsequenz, welche eine erste Vielzahl von Rauschzahlen aufweist, vor dem Schritt des Erzeugens der Rauschsequenzen für jede Frequenzkomponente der Vielzahl von Frequenzkomponenten.

**8.** Verfahren nach Anspruch 7,
wobei der Schritt des Erzeugens der Rauschsequenz für jede Frequenzkomponente der Vielzahl von Frequenzkomponenten den Schritt des Verringerns und Modifizierens der Amplitude der ersten Rauschsequenz aufweist, welche die erste Vielzahl von Rauschzahlen aufweist, um die Rauschsequenz für jede Frequenzkomponente der Vielzahl von Frequenzkomponenten zu erzeugen.

**9.** System zum Erzeugen einer Vielzahl von durch Rauschen verschlechterter Bilder aus einem Bild, welches auf einem Computerbildschirm darstellbar ist, zum Abschrecken vor nicht autorisierter Wiederverwendung des Bildes, welches aufweist:

Mittel zum Umwandeln eines Bildes (200), welches auf einem Computerbildschirm (120) darstellbar ist, in einer Vielzahl von Frequenzkomponenten (210);
Mittel zum Erzeugen einer Rauschsequenz (320) für jede Frequenzkomponente der Vielzahl von Frequenzkomponenten, wobei jede Rauschsequenz eine Vielzahl von Rauschzahlen aufweist; Mittel zum Auswählen einer ersten Rauschzahl aus jeder der Rauschsequenzen in Bezug auf ein erstes durch Rauschen verschlechtertes Bild (215);
Mittel zum Verschlechtern jeder Frequenzkomponente der Vielzahl von Frequenzkomponenten unter Verwendung der ersten Rauschzahl jeder Rauschsequenz, welche mit jeder Frequenzkomponente der Vielzahl von Frequenzkomponenten korrespondiert, um eine durch Rauschen verschlechterte Frequenzkomponente in einer ersten Vielzahl von durch Rauschen verschlechterter Frequenzkomponenten (220) auszubilden; Mittel zum Umwandeln der ersten Vielzahl von durch Rauschen verschlechterter Frequenzkomponenten in das erste durch Rauschen verschlechterte Bild (230);
Mittel zum Auswählen einer zweiten Rauschzahl aus jeder der Rauschsequenzen in Bezug auf ein zweites durch Rauschen verschlechtertes Bild (215);
Mittel zum Verschlechtern jeder Frequenzkomponente der Vielzahl von Frequenzkomponenten unter Verwendung der zweiten Rauschzahl jeder Rauschsequenz, welche mit jeder Frequenzkomponente der Vielzahl von Frequenzkomponenten korrespondiert, um eine durch Rauschen verschlechterte Frequenzkomponente in einer zweiten Vielzahl von durch Rauschen verschlechterter Frequenzkomponenten (220) auszubilden;
Mittel zum Umwandeln der zweiten Vielzahl von durch Rauschen verschlechterter Frequenzkomponenten in das zweite durch Rauschen verschlechterte Bild (230); und
Mittel zum aufeinander folgenden Darstellen des ersten und des zweiten durch Rauschen verschlechterten Bildes (240),

wobei die virtuelle Wahrnehmung des dargestellten ersten und zweiten durch Rauschen verschlechterten Bildes im Wesentlichen die virtuellen Wahrnehmung des Bildes ergibt, und
wobei ein Versuch der Bildaufnahme des Bildes im Wesentlichen einer Bildaufnahme eines der dargestellten ersten und zweiten durch Rauschen verschlechterter Bilder ergibt, um damit die nicht autorisierte Wiederverwendung des Bildes zu verhindern, wobei die Bildaufnahme des Bildes eine nicht autorisierte Wiederverwendung des Bildes ist.

**10.** System nach Anspruch 9,
wobei die Mittel zum aufeinander folgenden Darstellen des ersten und des zweiten durch Rauschen verschlechterten Bildes Mittel zum Wiederholen der aufeinander folgenden Darstellungen des ersten und des zweiten durch Rauschen verschlechterten Bildes aufweisen.

**11.** System nach Anspruch 10,
wobei die Mittel zum aufeinander folgenden Darstellen des ersten und zweiten durch Rauschen verschlechterten Bildes des Weiteren Mittel zum aufeinander folgenden Darstellen des ersten und zweiten durch Rauschen verschlechterten Bildes in Abhängigkeit mit der Bildschirmwiederholungsfrequenz des Computerbildschirmes aufweisen.

**12.** System nach Anspruch 9,
wobei die Mittel zum Erzeugen der Rauschsequenz für jede Frequenzkomponente der Vielzahl von Frequenzkomponenten Mittel zum Erzeugen der Rauschsequenz mit einer Vielzahl von Segmenten für jede Frequenzkomponente der Vielzahl von Frequenzkomponenten aufweisen, wobei der arithmetische Mittelwert jeder der Vielzahl von Segmenten gegen null tendiert.

**13.** System nach Anspruch 9,
wobei die Mittel zum Umwandeln des Bildes Mittel zum Ausführen einer Fast-Fourier-Transformation an dem Bild aufweisen.

**14.** System nach Anspruch 13,
wobei die Mittel zum Umwandeln der ersten und zweiten Vielzahlen von durch Rauschen verschlechterter Frequenzkomponenten Mittel zum Ausführen einer inversen Fast-Fourier-Transfor-mation an den ersten und zweiten Vielzahlen von durch Rauschen verschlechterter Frequenzkomponenten aufweisen.

**15.** System nach Anspruch 9,
des Weiteren aufweisend Mittel zum Erzeugen einer ersten Rauschsequenz, welche eine erste Vielzahl von Rauschzahlen aufweist, vor der Erzeugung der Rauschsequenz für jede Frequenzkomponente der Vielzahl von Frequenzkomponenten.

**16.** System nach Anspruch 15,
wobei die Mittel zum Erzeugen der Rauschsequenz für jede Frequenzkomponente der Vielzahl von Frequenzkomponenten Mittel zum Verringern und Modifizieren der Amplitude der ersten Rauschsequenz aufweisen, die die erste Vielzahl von Rauschzahlen aufweist um die Rauschsequenz für jede Frequenzkomponente der Vielzahl von Frequenzkomponenten zu erzeugen.

**Revendications**

**1.** Procédé pour générer une pluralité d'images détériorées par un bruit à partir d'une image affichable sur un écran d'ordinateur pour dissuader de la réutilisation non autorisée de l'image, le procédé comprenant les étapes consistant en :

la transformation d'une image (200) affichable sur un écran d'ordinateur (120) en une pluralité de composantes de fréquence (210) ;
la génération d'une séquence de bruit (320) pour chaque composante de fréquence dans la pluralité de composantes de fréquence, chaque séquence de bruit ayant une pluralité de numéros de bruit ;
le choix, par rapport à une première image détériorée par un bruit (215), d'un premier numéro de bruit à partir de chaque séquence de bruit ;
la détérioration de chaque composante de fréquence dans la pluralité de composantes de fréquence en utilisant le premier numéro de bruit à partir de chaque séquence de bruit correspondant à chaque composante de fréquence dans la pluralité de composantes de fréquence pour former une composante de fréquence détériorée par un bruit dans une première pluralité de composantes de fréquence détériorées par un bruit (220) ;
la transformation de la première pluralité de composantes de fréquence détériorées par un bruit en la première image détériorée par un bruit (230) ;
le choix, par rapport à une deuxième image détériorée par un bruit (215), d'un deuxième numéro de bruit à partir de chaque séquence de bruit ;
la détérioration de chaque composante de fréquence dans la pluralité de composantes de fréquence en utilisant le deuxième numéro de bruit à partir de chaque séquence de bruit correspondant à chaque composante de fréquence dans la pluralité de composantes de fréquence pour former une composante de fréquence détériorée par un bruit dans une deuxième pluralité de composantes de fréquence détériorées par un bruit (220) ;
la transformation de la deuxième pluralité de composantes de fréquence détériorées par un bruit en la deuxième image détériorée par un bruit (230) ; et
l'affichage consécutif des première et deuxième images détériorées par un bruit (240),

dans lequel la perception visuelle des première et deuxième images détériorées par un bruit affichées entraîne sensiblement la perception visuelle de l'image, et
dans lequel un essai de saisie d'image de l'image entraîne sensiblement une saisie d'image de l'une des première et deuxième images détériorées par un bruit affichées pour empêcher ainsi la réutilisation non autorisée de l'image, la saisie d'image de l'image étant une réutilisation non autorisée de l'image.

**2.** Procédé selon la revendication 1, dans lequel l'étape d'affichage consécutif des première et deuxième images détériorées par un bruit comprend l'étape de répétition de l'affichage consécutif des première et deuxième images détériorées par un bruit.

**3.** Procédé selon la revendication 2, dans lequel l'étape d'affichage consécutif des première et deuxième images détériorées par un bruit comprend, en outre, l'étape d'affichage consécutif des première et deuxième images détériorées par un bruit selon les fréquences de rafraîchissement d'affichage de l'écran d'ordinateur.

**4.** Procédé selon la revendication 1, dans lequel l'étape de génération d'une séquence de bruit pour chaque composante de fréquence dans la pluralité de composantes de fréquence comprend l'étape de génération d'une séquence de bruit avec une pluralité de segments pour chaque composante de fréquence dans la pluralité de composantes de fréquence, dans lequel les valeurs moyennes arithmétiques de chacun de la pluralité de segments tendent vers zéro.

**5.** Procédé selon la revendication 1, dans lequel l'étape de transformation de l'image comprend l'étape d'exécution de la transformée de Fourier rapide sur l'image.

**6.** Procédé selon la revendication 5, dans lequel les étapes de transformation des première et deuxième pluralités de composantes de fréquence détériorées par un bruit comprennent les étapes d'exécution de la transformée de Fourier inverse sur les première et deuxième pluralités de composantes de fréquence détériorées par un bruit.

**7.** Procédé selon la revendication 1, comprenant en outre l'étape de génération d'une première séquence de bruit ayant une première pluralité de numéros de bruit avant l'étape de génération de la séquence de bruit pour chaque composante de fréquence dans la pluralité de composantes de fréquence.

**8.** Procédé selon la revendication 7, dans lequel l'étape de génération de la séquence de bruit pour chaque composante de fréquence dans la pluralité de composantes de fréquence comprend l'étape de troncature et de modification de l'amplitude de la première séquence de bruit ayant la première pluralité de numéros de bruit pour générer la séquence de bruit pour chaque composante de fréquence dans la pluralité de composantes de fréquence.

**9.** Système de génération d'une pluralité d'images détériorées par un bruit à partir d'une image affichable sur un écran d'ordinateur pour dissuader de la réutilisation non autorisée de l'image, comprenant :

des moyens de transformation d'une image (200) affichable sur un écran d'ordinateur (120) en une pluralité de composantes de fréquence (210) ;
des moyens de génération d'une séquence de bruit (320) pour chaque composante de fréquence dans la pluralité de composantes de fréquence, chaque séquence de bruit ayant une pluralité de numéros de bruit ;
des moyens de sélection, par rapport à une première image détériorée par un bruit (215), d'un premier numéro de bruit à partir de chaque séquence de bruit ;
des moyens de détérioration de chaque composante de fréquence dans la pluralité de composantes de fréquence en utilisant le premier numéro de bruit à partir de chaque séquence de bruit correspondant à chaque composante de fréquence dans la pluralité de composantes de fréquence pour former une composante de fréquence détériorée par un bruit dans une première pluralité de composantes de fréquence détériorées par un bruit (220) ;
des moyens de transformation de la première pluralité de composantes de fréquence détériorées par un bruit en la première image détériorée par un bruit (230) ;
des moyens de sélection, par rapport à la deuxième image détériorée par un bruit (215), d'un deuxième numéro de bruit à partir de chaque séquence de bruit ;
des moyens de détérioration de chaque composante de fréquence dans la pluralité de composantes de fréquence en utilisant le deuxième numéro de bruit à partir de chaque séquence de bruit correspondant à chaque composante de fréquence dans la pluralité de composantes de fréquence pour former une composante de fréquence détériorée par un bruit dans une deuxième pluralité de composantes de fréquence détériorées par un bruit (220) ;
des moyens de transformation de la deuxième pluralité de composantes de fréquence détériorées par un bruit en la deuxième image détériorée par un bruit (230) ; et
des moyens d'affichage consécutif des première et deuxième images détériorées par un bruit (240),

dans lequel la perception visuelle des première et deuxième images détériorées par un bruit affichées entraîne sensiblement la perception visuelle de l'image, et

dans lequel un essai de saisie d'image de l'image entraîne sensiblement une saisie d'image d'une des première et deuxième images détériorées par un bruit affichées pour ainsi empêcher la réutilisation non autorisée de l'image, la saisie d'image étant une réutilisation non autorisée de l'image.

10. Système selon la revendication 9, dans lequel les moyens d'affichage consécutif des première et deuxième images détériorées par un bruit comprennent des moyens de répétition de l'affichage consécutif des première et deuxième images détériorées par un bruit.

11. Système selon la revendication 10, dans lequel les moyens d'affichage consécutif des première et deuxième images détériorées par un bruit comprennent en outre des moyens d'affichage consécutif des première et deuxième images détériorées par un bruit selon la fréquence de rafraîchissement d'affichage de l'écran d'ordinateur.

12. Système selon la revendication 9, dans lequel les moyens de génération de la séquence de bruit pour chaque composante de fréquence dans la pluralité de composantes de fréquence comprennent des moyens de génération de la séquence de bruit avec une pluralité de segments pour chaque composante de fréquence dans la pluralité de composantes de fréquence, dans lequel la valeur arithmétique moyenne de chacun de la pluralité de segments tend vers zéro.

13. Système selon la revendication 9, dans lequel les moyens de transformation de l'image comprennent des moyens d'exécution de la transformée de Fourier rapide sur l'image.

14. Système selon la revendication 13, dans lequel les moyens de transformation des première et deuxième pluralités de composantes de fréquence détériorées par un bruit comprennent des moyens d'exécution de la transformation de Fourier inverse sur les première et deuxième pluralités des composantes de fréquence détériorées par un bruit.

15. Système selon la revendication 9, comprenant en outre des moyens de génération d'une première séquence de bruit ayant une première pluralité de numéros de bruit avant la génération de la séquence de bruit pour chaque composante de fréquence dans la pluralité de composantes de fréquence.

16. Système selon la revendication 15, dans lequel les moyens de génération de la séquence de bruit pour chaque composante de fréquence dans la pluralité de composantes de fréquence comprennent des moyens de troncature et de modification de l'amplitude de la première séquence de bruit ayant la première pluralité de numéros de bruit pour générer la séquence de bruit pour chaque composante de fréquence dans la pluralité de composantes de fréquence.

**Figure 1**

**Figure 2**

| Original spatial Image | 300 |
|---|---|

↓

| Calculating Hash value *v* | 310 |
|---|---|

↓

| Generating a random sequence from seed *v* | 320 |
|---|---|

↓

| Truncating the sequence for every component | 330 |
|---|---|

↓

| Regulating the amplitude | 340 |
|---|---|

↓

| Combining all components | 350 |
|---|---|

# Figure 3

**Figure 4**